# FASCICULE DE BREVET EUROPEEN

(11) **EP 0 635 359 B1**
(45) Date de publication et mention de la délivrance du brevet: **02.01.2002**
(21) Numéro de dépôt: 94401649.2
(22) Date de dépôt: 19.07.1994
(51) Int. Cl.: B32B 17/10, B60J 1/00

(54) **Vitre blindée pour véhicules automobiles**
Panzerglasscheibe für Autos
Armoured glass for cars

(30) Priorité: 22.07.1993 DE 9310957 U
(43) Date de publication de la demande: 25.01.1995
(73) Titulaire: Saint-Gobain Glass France, 92400 Courbevoie (FR)
(72) Inventeur: von Alpen, Ulrich, Dr., D-52078 Aachen (DE)
(74) Mandataire: Muller, René

(56) Documents cités:
- EP-A- 0 418 123
- DE-A- 3 421 571
- FR-A- 2 201 265
- FR-A- 2 495 130
- FR-A- 2 640 194
- US-A- 4 910 074

## Description

La présente invention concerne une vitre blindée contre les projectiles notamment pour véhicules automobiles consistant en plusieurs feuilles de verre de silicate unies les unes aux autres par des couches intermédiaires respectives de polymère thermoplastique et d'une feuille ou plaque de matière plastique résistant aux chocs qui est appliquée à l'aide d'une couche d'adhésif thermoplastique sur la surface de la vitre blindée tournée vers l'habitacle dans l'état installé et qui est munie, sur sa surface libre, d'un revêtement résistant aux rayages.

Des vitres blindées contre les projectiles de ce genre sont connues, par exemple, par le document DE 34 21 571. L'une des vitres blindées décrites dans ce document est constituée, par exemple, de trois feuilles de verre de silicate chacune d'une épaisseur de 6 mm qui sont unies les unes aux autres par des feuilles de polyvinylbutyral d'une épaisseur de 0,76 mm. Sur la surface tournée vers l'habitacle, une plaque de polycarbonate est unie à la vitre blindée par une couche de polyuréthanne thermoplastique et est munie sur sa surface libre d'une couche de polyuréthanne souple et élastique de caractère autoréparateur.

D'une part, la pose d'une plaque de matière plastique résistant aux chocs telle que le polycarbonate sur la face arrière de la vitre blindée est efficace pour empêcher avec certitude dans le cas d'un projectile tout dégagement d'éclats sur cette face. D'autre part, des difficultés apparaissent avec de tels vitrages sous fortes insolations en raison de la dilatation thermique différente de la plaque de polycarbonate arrière et de la feuille de verre de silicate. Les contraintes de cisaillement apparaissant aux températures élevées dans la couche d'adhésif entre la plaque de polycarbonate et la surface du verre peuvent en effet, dans des circonstances défavorables, conduire à des déformations ou même à des décollements de la plaque de polycarbonate.

L'invention a pour but de procurer une vitre blindée notamnent contre les projectiles avec laquelle le risque d'une déformation ou d'un décollement de la plaque de polycarbonate sous l'influence de l'insolation est exclu ou au moins fortement diminué.

La vitre blindée conforme à l'invention est caractérisée en ce qu'une feuille de verre de silicate disposée devant la feuille ou plaque de matière résistant aux chocs, vers l'extérieur, est pourvue d'une couche réfléchissant le rayonnement thermique.

Par la présence de la couche réfléchissant le rayonnement thermique qui est appliquée, de préférence, sur le côté tourné vers l'intérieur de la feuille de verre la plus extérieure, on obtient que le rayonnement thermique provenant de l'extérieur soit en majeure partie réfléchi, de sorte que la vitre blindée s'échauffe dans une mesure sensiblement faible ou n'atteint sa température finale qu'après un temps sensiblement plus long. Par conséquent, les contraintes de cisaillement qui apparaissent dans la couche d'interface entre la plaque de polycarbonate et la feuille de verre sont sensiblement plus faibles ou n'atteignent leur valeur la plus élevée que sensiblement plus tard. Les contraintes de cisaillement apparaissant dans la couche d'adhésif entre la plaque de polycarbonate et la feuille de verre peuvent alors être mieux dissipées par la déformation plastique de la couche d'adhésif, c'est-à-dire par des processus de fluage dans cette couche du fait qu'une durée plus longue est disponible à cet effet. Le résultat est que les déformations perturbatrices de la feuille de polycarbonate ou même les décollements sont notablement diminués ou même complètement supprimés par l'échauffement plus faible ou plus lent.

Suivant une première forme de réalisation de la nouvelle vitre blindée, la couche réfléchissant la chaleur est appliquée sur la feuille de verre la plus extérieure de la vitre blindée proprement dite. La couche réfléchissant la chaleur offre une efficacité maximale lorsqu'elle est disposée immédiatement sur la face extérieure de la vitre blindée. A cet effet, cependant, on a besoin de couches qui soient très résistantes à l'abrasion et aux influences atmosphériques. Les structures en couche à base d'argent qui ont des propriétés de transmission et de réflexion particulièrement favorables et qui sont utilisées en grande partie pour les vitres protégeant contre la chaleur ne peuvent cependant pas être mises en oeuvre sans protection. Ces couches sont donc, de préférence, appliquées sur la surface de la feuille de verre la plus extérieure contiguë à la couche intermédiaire thermoplastique.

Une autre forme de réalisation avantageuse de l'invention est caractérisée en ce que la couche réfléchissant la chaleur est disposée sur une autre feuille de verre qui, avec un espace d'air qui les sépare de la surface tournée vers l'extérieur de la vitre blindée proprement dite, est unie à celle-ci par l'intermédiaire d'un cadre d'écartement. Cette forme de réalisation offre l'avantage supplémentaire qu'il est possible d'utiliser pour l'autre feuille de verre, une feuille de verre de série qui peut être montée en tant que telle au ras du contour extérieur du véhicule. On peut obtenir de cette façon qu'un véhicule muni d'une telle vitre blindée se rapproche de l'aspect extérieur d'un véhicule de série, c'est-à-dire que le véhicule ne peut être identifié comme véhicule blindé que dans une mesure très faible.

D'autres avantages et particularités de l'invention ressortent des sous-revendications et de la description donnée ci-après de divers exemples de réalisation avec référence aux dessins.

Dans les dessins, dont les figures sont toutes des vues en coupe fragmentaires :
la Fig. 1 illustre une première forme de réalisation de la nouvelle vitre blindée;
la Fig. 2 illustre une deuxième forme de réalisation de la nouvelle vitre blindée, et
la Fig. 3 illustre une troisième forme de réalisation de la nouvelle vitre blindée.

Les vitres blindées du genre décrit ici conviennent fondamentalement pour tous les vitrages d'un véhicule automobile, c'est-à-dire tant pour les vitrages montés fixes, comme le pare-brise et la lunette arrière que pour les vitrages latéraux et de portières montés fixes et réglable en hauteur. Le montage de la vitre blindée se fait de manière connue et classique et les particularités y afférentes ne sont donc pas représentées dans les dessins.

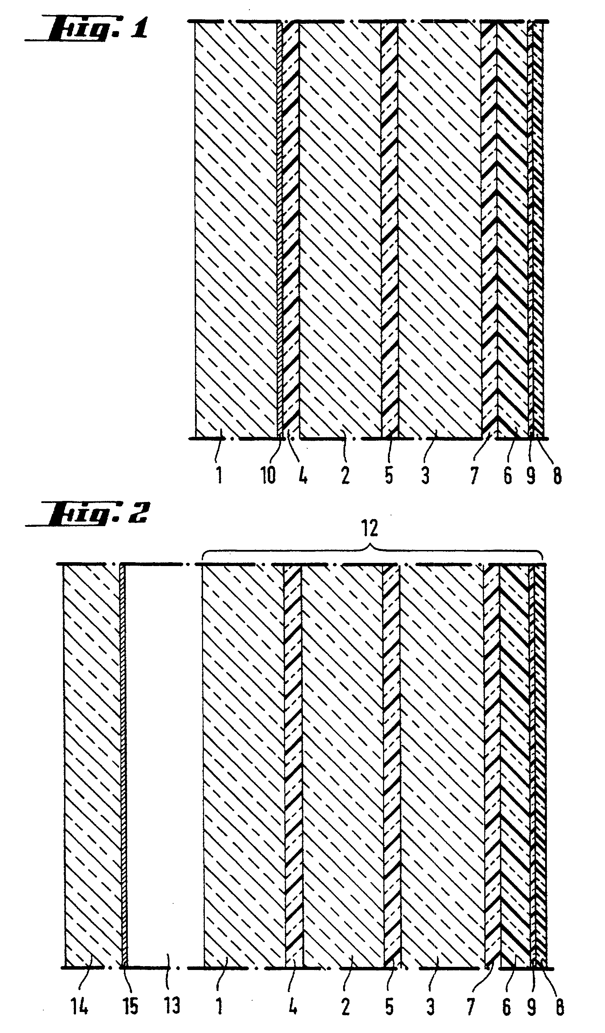

La vitre blindée représentée à la Fig. 1 comprend trois feuilles de verre de silicate 1, 2 et 3, chacune d'une épaisseur de 8 mm, qui sont unies les unes aux autres par les deux couches intermédiaires 4 et 5 chacune d'une épaisseur de 0,76 mm. Une plaque de polycarbonate 6 d'une épaisseur d'environ 3 mm est appliquée sur la feuille de verre de silicate 3 qui, dans l'état installé de la vitre blindée, est tournée vers l'intérieur, c'est-à-dire vers l'habitacle. Cette plaque de polycarbonate 6 est collée sur la feuille de verre 3 au moyen d'une couche d'adhésif 7 d'une épaisseur de 1,5 à 2,5 mm, en polyuréthanne thermoplastique. La plaque de polycarbonate 6 est pourvue d'une feuille 8 de polyuréthanne souple et élastique sur sa surface tournée vers l'habitacle, le collage à la plaque de polycarbonate 6 étant assuré par une mince couche d'adhésif 9 d'un polyuréthanne thermoplastique approprié.

La feuille de verre 1 tournée vers le côté extérieur est munie, sur sa face contiguë à la couche intermédiaire 4, de la couche réfléchissant le rayonnement thermique 10. Cette couche 10 est, de préférence, appliquée par le procédé de pulvérisation cathodique réactive assistée par un champ magnétique et est une couche multiple comprenant une mince couche d'argent comme couche fonctionnelle proprement dite. Cette couche multiple a, par exemple, la structure verre-ZnO (35 nm) - Ag (10 nm) - ZnO (35 nm). De façon avantageuse, une couche supplémentaire d'oxyde de tantale d'une épaisseur d'environ 20 nm qui améliore l'adhérence de la couche multiple à la couche intermédiaire thermoplastique 4 qui est habituellement en polyvinylbutyral, est appliquée sur cette couche multiple.

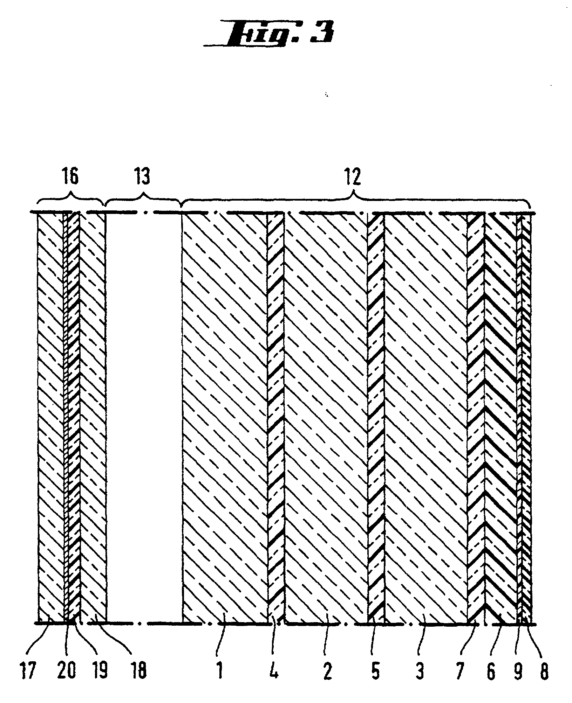

La vitre blindée représentée à la Fig. 2 est réalisée en deux parties, la partie 12 tournée vers l'habitacle ayant, à l'exception de la couche réfléchissant la chaleur, la structure de la vitre blindée décrite avec référence à la Fig. 1. Les diverses couches de cette partie 12 sont donc désignées par les mêmes chiffres de référence que les couches correspondantes de la Fig. 1. Une feuille de verre monolithique 14, par exemple, une vitre de sécurité trempée est disposée devant la partie 12 qui est faite d'un verre feuilleté multicouche et ce, avec interposition d'un espace d'air 13. Cette vitre 14 est unie de façon étanche à la feuille de verre 1 à la façon d'une vitre isolante au moyen d'un cadre d'écartement non représenté aux dessins, disposé sur le pourtour de la vitre. La couche réfléchissant la chaleur 15, qui correspond par sa structure à la couche 10 de la Fig. 1, est appliquée sur la face de la feuille de verre 14 tournée vers l'espace d'air 13. Cette structure de vitre a un effet encore plus favorable pour ce qui est de l'échauffement de la plaque de polycarbonate 6 du fait que la couche d'air 13 supplémentaire constitue une couche d'isolation supplémentaire pour le flux de chaleur.

La structure de la vitre blindée peut également être modifiée de façon que la partie extérieure de la vitre blindée soit constituée non pas d'une vitre monolithique, mais d'une vitre feuilletée. Une telle structure de vitre est représentée à la Fig. 3. La partie 12 tournée vers l'intérieur du véhicule a de nouveau la même structure que la partie 12 de l'exemple de réalisation précédent. La vitre feuilletée 16 disposée au-delà de l'espace intermédiaire d'air 13 est constituée de deux feuilles de verre simples 17, 18, chacune d'une épaisseur d'environ 3 mm qui sont unies l'une à l'autre par une feuille thermoplastique 19 d'une épaisseur de 0,76 mm. La feuille de verre simple 17 extérieure de cette vitre feuilletée 16 est munie, sur sa face contiguë à la couche intermédiaire thermoplastique 19, d'une couche 20 réfléchissant le rayonnement thermique qui présente la même structure que la couche 10 décrite dans le premier exemple de réalisation.

Dans tous les cas représentés, la feuille de verre munie de la couche réfléchissant la chaleur est unie à une autre feuille de verre soit par la totalité de sa surface, soit au niveau de son contour, par l'intermédiaire d'un cadre d'écartement. Dans tous ces cas, il faut veiller à ce que le revêtement réfléchissant la chaleur soit éliminé sur une largeur de quelques millimètres dans la région périphérique de la feuille de verre ou empêcher par des mesures appropriées, lors du revêtement de la feuille de verre, que la couche soit formée dans cette région périphérique. De cette façon, on obtient au bord des feuilles de verre une liaison mutuelle qui est particulièrement durable.

En tant que couche de polyuréthane souple et élastique de caractère réparateur (ou autocicatrisant) on peut utiliser une couche de polyuréthane thermodurcissable (ou réticulé) comme celles décrites par exemple dans les publications de brevets EP-A-190 517 et FR-A-225 1608.

## Revendications

1. Vitre blindée notamment pour véhicules automobiles constituée de plusieurs feuilles de verre de silicate unies les unes aux autres par des couches intermédiaires de polymère thermoplastique et d'une feuille ou plaque de matière plastique résistant aux chocs qui est appliquée à l'aide d'une couche d'adhésif thermoplastique sur la surface de la vitre blindée tournée vers l'habitacle dans l'état installé et qui est munie sur sa surface libre d'un revêtement résistant aux rayages, **caractérisée en ce qu'**une feuille de verre de silicate (1; 14; 17) disposée devant la feuille ou plaque (6) de matière plastique résistant aux chocs vers l'extérieur, est pourvue d'une couche réfléchissant le rayonnement thermique (10, 15, 20).

2. Vitre blindée suivant la revendication 1, **caractérisée en ce que** la couche (10) réfléchissant le rayonnement thermique est appliquée sur la plus extérieure des feuilles de verre de silicate (1, 2, 3) unies entre elles par des couches intermédiaires thermoplastiques (4, 5) sur la face contiguë à la couche intermédiaire (4).

3. Vitre blindée suivant la revendication 1, **caractérisée en ce que** la couche réfléchissant le rayonnement thermique (15, 20) est appliquée sur une autre feuille de verre (14; 16) qui, avec un espace d'air (13) du côté de la vitre blindée (12) tourné vers l'extérieur, est unie à celle-ci par l'intermédiaire d'un cadre d'écartement.

4. Vitre blindée suivant la revendication 3, **caractérisée en ce que** l'autre feuille de verre (14) est une vitre de sécurité trempée par voie thermique qui est munie sur sa face tournée vers l'espace d'air intermédiaire (13) de la couche (15) réfléchissant le rayonnement thermique.

5. Vitre blindée suivant la revendication 3, **caractérisée en ce que** l'autre feuille de verre est une vitre en verre feuilleté (16) consistant en deux feuilles de verre (17, 18) et en une couche intermédiaire thermoplastique (19) et est munie de la couche (20) réfléchissant le rayonnement thermique sur une surface contiguë à la couche intermédiaire thermoplastique (19) de l'une des feuilles de verre (17, 18).

6. Vitre blindée suivant l'une quelconque des revendications 1 à 5, **caractérisée en ce que** la couche réfléchissant le rayonnement thermique (10; 15; 20) est une couche multiple présentant la structure oxyde métallique-argent-oxyde métallique.

7. Vitre blindée suivant l'une quelconque des revendications 1 à 6, **caractérisée en ce que** la couche réfléchissant le rayonnement thermique (10; 15; 20) se termine dans la région périphérique à distance du bord de la feuille et **en ce que** la liaison de la feuille de verre revêtue (1; 14; 17) à la feuille de verre voisine (2; 1; 18) est assurée par la couche intermédiaire adhésive (2; 19) ou par la masse d'étanchéité adhésive du cadre d'écartement à la périphérie à côté de la couche réfléchissant le rayonnement thermique (10; 15; 20).

8. Vitre blindée suivant l'une quelconque des revendications 1 à 7, **caractérisée en ce que** la plaque ou feuille en matière plastique résistant aux chocs (6) est en polycarbonate et est revêtue sur sa surface libre d'une couche résistant aux rayages souple et élastique (8) consistant en un polyuréthanne ayant des propriétés d'autoréparation.

## Patentansprüche

1. Panzerglasscheibe insbesondere für Kraftfahrzeuge aus mehreren jeweils über Zwischenschichten aus thermoplastischem Polymer miteinander verbundenen Silikatglasscheiben und einer auf der im eingebauten Zustand zum Fahrgastraum weisenden Oberfläche der Panzerglasscheibe über eine thermoplastische Klebeschicht angeordneten Folie oder Platte aus schlagfestem Kunststoff, die auf ihrer freien Oberfläche mit einer Kratzfestbeschichtung versehen ist, **dadurch gekennzeichnet, dass** eine der Folie oder Platte (6) aus schlagfestem Kunststoff zur Außenseite hin vorgelagerte Silikatglasscheibe (1; 14; 17) mit einer Wärmestrahlen reflektierenden Schicht (10; 15; 20) versehen ist.

2. Panzerglasscheibe nach Anspruch 1, **dadurch gekennzeichnet, dass** die Wärmestrahlen reflektierende Schicht (10) auf der äussersten der über thermoplastische Zwischenschichten (4, 5) miteinander verbundenen Silikatglasscheiben (1, 2, 3) auf der an der Zwischenschicht (4) anliegenden Seite angeordnet ist.

3. Panzerglasscheibe nach Anspruch 1, **dadurch gekennzeichnet, dass** die Wärmestrahlen reflektierende Schicht (15, 20) auf einer weiteren Glasscheibe (14; 16) angeordnet ist, die mit Luftabstand (13) auf der nach außen weisenden Seite der Panzerglasscheibe (12) über einen Distanzrahmen mit dieser verbunden ist.

4. Panzerglasscheibe nach Anspruch 3, **dadurch gekennzeichnet, dass** die weitere Glasscheibe (14) eine thermisch vorgespannte Einscheibensicherheitsglasscheibe ist, die auf ihrer dem Luftzwischenraum (13) zugewandten Seite mit der Wärmestrahlen reflektierenden Schicht (15) versehen ist.

5. Panzerglasscheibe nach Anspruch 3, **dadurch gekennzeichnet, dass** die weitere Glasscheibe eine aus zwei Glasscheiben (17,18) und einer thermoplastischen Zwischenschicht (19) bestehende Verbundglasscheibe (16) ist, die auf einer an der thermoplastischen Zwischenschicht (19) anliegenden Oberfläche einer der Glasscheiben (17, 18) mit der Wärmestrahlen reflektierenden Schicht (20) versehen ist.

6. Panzerglasscheibe nach einem der Ansprüche 1 bis 5, **dadurch gekennzeichnet, dass** die Wärmestrahlen reflektierende Schicht (10; 15; 20) eine Mehrfachschicht mit dem Aufbau Metalloxid-Silber-Metalloxid ist.

7. Panzerglasscheibe nach einem der Ansprüche 1 bis 6, **dadurch gekennzeichnet, dass** die Wärmestrahlen reflektierende Schicht (10; 15; 20) im Randbereich im Abstand vor der Scheibenkante endet, und dass die Verbindung der beschichteten Glasscheibe (1; 14; 17) mit der benachbarten Glasscheibe (2; 1; 18) über die klebende Zwischenschicht (2; 19) oder über die Klebedichtmasse des Abstandsrahmens am Rand neben der Wärmestrahlen reflektierenden Schicht (10; 15; 20) sichergestellt ist.

8. Panzerglasscheibe nach einem der Ansprüche 1 bis 7, **dadurch gekennzeichnet, dass** die Platte oder Folie aus schlagfestem Kunststoff (6) aus Polycarbonat besteht, die auf ihrer freien Oberfläche mit einer weichelastischen Kratzfestbeschichtung (8) aus einem Polyurethan mit Selbstheilungseigenschaften beschichtet ist.

## Claims

1. Armoured window, particularly for cars and constituted by several silicate glass sheets joined to one another by intermediate, thermoplastic polymer coatings and a sheet or plate of impact-resistant plastics material applied with the aid of a thermoplastic adhesive coating to the surface of the armoured window turned towards the passenger compartment in the installed state and provided on its free surface with a scoring-resistant layer, **characterized in that** a silicate glass sheet (1, 14, 17) placed in front of the impact-resistant, plastics material sheet or plate (6) towards the outside is provided with a thermal radiation reflecting coating (10, 15, 20).

2. Armoured window according to claim 1, **characterized in that** the thermal radiation reflecting coating (10) is applied to the outermost of the silicate glass sheets (1, 2, 3) joined to one another by intermediate, thermoplastic coatings (4, 5) on the face contiguous to the intermediate coating (4).

3. Armoured window according to claim 1, **characterized in that** the thermal radiation reflecting coating (15, 20) is applied to another glass sheet (14, 16) which, with an air space (13) on the side of the armoured window (12) directed towards the outside, is joined to the latter by means of a spacing frame.

4. Armoured window according to claim 3, **characterized in that** said other glass sheet (14) is a thermally tempered safety window provided on its face directed towards the intermediate air space (13) of the thermal radiation reflecting coating (15).

5. Armoured window according to claim 3, **characterized in that** the other glass sheet is a laminated glass window (16) formed from two glass sheets (17, 18) and an intermediate thermoplastic coating (19) and is provided with the thermal radiation reflecting coating (20) on a surface contiguous to the intermediate, thermoplastic coating (19) of one of the glass sheets (17, 18).

6. Armoured window according to any one of the claims 1 to 5, **characterized in that** the thermal radiation reflecting coating (10, 15, 20) is a multiple coating having a metal oxide-silver-metal oxide structure.

7. Armoured window according to any one of the claims 1 to 6, **characterized in that** the thermal radiation reflecting coating (10, 15, 20) is terminated in the peripheral region spaced from the edge of the sheet and **in that** the connection of the coated glass sheet (1, 14, 17) to the adjacent glass sheet (2, 1, 18) is ensured by the intermediate, adhesive coating (2, 19) or by the adhesive sealing mass of the spacing window on the periphery beside the thermal radiation reflecting coating (10, 15, 20).

8. Armoured window according to any one of the claims 1 to 7, **characterized in that** the impact-resistant, plastics material sheet or plate (6) is of polycarbonate and its free surface is coated with a flexible, elastic, scoring-resistant coating (18) of polyurethane having self-repair properties.
